# EUROPÄISCHE PATENTSCHRIFT

(11) **EP 3 873 841 B1**
(45) Veröffentlichungstag und Bekanntmachung des Hinweises auf die Patenterteilung: **05.10.2022**
(21) Anmeldenummer: 19787312.8
(22) Anmeldetag: 23.10.2019
(51) Int. Cl.: B66B 23/02

(54) **FÖRDERKETTE FÜR EIN PALETTENBAND EINES FAHRSTEIGES GERINGER BAUHÖHE**
CONVEYING CHAIN FOR A PANEL BELT OF A MOVING WALKWAY OF SMALL OVERALL HEIGHT
CHAÎNE TRANSPORTEUSE POUR UNE BANDE À PALETTES D'UN TAPIS ROULANT DE FAIBLE ENCOMBREMENT EN HAUTEUR

(30) Priorität: 30.10.2018 EP 18203435
(43) Veröffentlichungstag der Anmeldung: 08.09.2021
(73) Patentinhaber: INVENTIO AG, 6052 Hergiswil (CH)
(72) Erfinder: PRAXMARER, Dominik, 1110 Wien (AT); KLEEWEIN, Gerhard, 3021 Pressbaum (AT); STREIBIG, Kurt, 3031 Rekawinkel (AT)
(74) Vertreter: Inventio AG
(86) Internationale Anmeldenummer: PCT/EP2019/078815
(87) Internationale Veröffentlichungsnummer: WO 2020/088998

(56) Entgegenhaltungen:
- WO-A1-2013/152714
- DE-B1- 2 713 449
- JP-A- H09 104 584
- US-A1- 2017 297 873

## Beschreibung

Die vorliegende Erfindung betrifft eine Förderkette für ein Palettenband eines Fahrsteiges sowie ein damit ausgestattetes Palettenband beziehungsweise einen damit ausgestatteten Fahrsteig.

Fahrsteige werden als Personenbeförderungsanlagen dazu eingesetzt, Personen innerhalb eines Bauwerks entlang eines im Regelfall horizontalen oder lediglich geringfügig geneigten Verfahrwegs zu befördern. Ein Fahrsteig verfügt hierzu über ein Palettenband, auf welchem Passagiere stehen können und welches umlaufend entlang des Verfahrwegs bewegt werden kann. An dem Palettenband ist eine Vielzahl von Paletten hintereinander angeordnet. Jede der Paletten ist im Regelfall zwischen zwei Förderketten angebracht, die entlang gegenüberliegender Seiten des Palettenbandes angeordnet sind. Jede der Förderketten ist wiederum aus einer Vielzahl länglicher Kettenglieder zusammengesetzt, welche in einem Teilungsabstand hintereinander angeordnet sind und über Kettenbolzen schwenkbar miteinander verbunden sind, sodass die gesamte Förderkette auf Zug hochbelastbar ist. Der Teilungsabstand entspricht hierbei im Wesentlichen dem Abstand der Mittellängsachsen der Kettenbolzen.

Das Palettenband ist umlaufend angeordnet. Das heißt, dass die Paletten mithilfe der Förderketten in einer Vorlaufrichtung entlang des Verfahrwegs bewegt werden können. An Enden des Verfahrwegs wird das Palettenband jeweils durch Umlenkeinrichtungen umgelenkt, sodass die Paletten mit dem ringförmig geschlossenen Palettenband in entgegengesetzter Rücklaufrichtung zurück zum Anfang des Verfahrwegs verlagert werden können. Entsprechende Umlenkeinrichtungen verfügen in der Regel über Umlenkkettenräder, welche jeweils mit einer der Förderketten zusammenwirken, um diese von der Vorlaufrichtung in die Rücklaufrichtung oder umgekehrt im Allgemeinen um 180° umzulenken.

Sofern ein Fahrsteig in einem neu zu bauenden Bauwerk installiert werden soll, kann vorgesehen werden, dass zumindest Teile des Fahrsteigs in einem Boden des Bauwerks integriert werden, sodass eine durch die Paletten im Vorlauf gebildete Lauffläche möglichst bündig mit einer Oberfläche dieses Bodens abschließen kann. Es kann vorteilhaft sein, für diesen Zweck Fahrsteige mit einer geringen Bauhöhe vorzusehen, um in den Böden des Bauwerks keine tiefen Gruben vorsehen zu müssen, in denen der Fahrsteig aufgenommen werden kann.

Soll in einem bereits bestehenden Bauwerk ein Fahrsteig nachgerüstet werden, kann es in manchen Fällen, beispielsweise aus Statikgründen, nicht möglich oder zumindest sehr aufwendig sein, diesen zumindest teilweise in einem Boden des Bauwerks zu versenken. In diesem Fall muss der Fahrsteig auf dem Boden des Bauwerks aufgebaut werden. Vorteilhafterweise sollte hierbei ein Höhenunterschied zwischen einem Niveau, auf dem die Lauffläche des Fahrsteigs verläuft, und einem Niveau des umgebenden Bodens möglichst gering sein. Somit ist insbesondere für diesen Anwendungsfall anzustreben, einen Fahrsteig mit besonders niedriger Bauhöhe einzusetzen.

Die Bauhöhe eines Fahrsteigs wird maßgeblich durch die Bauhöhe seiner Umlenkeinrichtungen und insbesondere durch einen Durchmesser der darin eingesetzten, in der Regel vertikal angeordneten Umlenkkettenräder bestimmt. Beim Einsatz von Umlenkkettenrädern mit sehr geringem Durchmesser kann es aufgrund der Tatsache, dass nicht beliebig schmale Paletten eingesetzt werden können, sondern die Paletten für den praktischen Einsatz eine Mindestlänge (gemessen in der Richtung des Verfahrwegs) aufweisen, zum Auftreten sogenannter Polygoneffekte kommen. Solche Polygoneffekte können spürbar auftreten, wenn die Länge der Paletten, und damit einhergehend auch ein Teilungsabstand der Förderkette, nicht ausreichend klein im Vergleich zum Durchmesser der Umlenkkettenräder sind. Zur Vermeidung von Polygoneffekten wurde daher bei herkömmlichen Fahrsteigen eine minimale Zähnezahl der Umlenkkettenräder von 17 Zähnen und damit eine Mindestbauhöhe im Regelfall nicht unterschritten.

In der WO 2013/152714 A1 wird ein Pallettenband zur Verwendung in einem Fördersystem, insbesondere einen Fahrsteig, beschrieben. Das beschriebene Palettenband weist zwei Förderketten und zwischen diesen, angeordnete Paletten auf. Dieses Palettenband kann aufgrund seiner strukturellen Auslegung in gewissem Maße helfen, Polygoneffekte auch beim Einsatz kleiner Umlenkkettenräder zu begrenzen. Allerdings ist der strukturelle Aufbau des beschriebenen Pallettenbandes relativ fragil und weist hochbelastete, sicherheitsrelevante Bauteile auf, die bei fehlerhafter Montage oder deren Versagen zu gefährlichen Situationen für die Benutzer führen könnten.

Es kann unter anderem ein Bedarf an einer Förderkette für ein Palettenband, an einem hiermit ausgebildeten Palettenband sowie an einem hiermit ausgebildeten Fahrsteig bestehen, bei denen unter anderem einige der oben genannten Probleme bzw. Beschränkungen vorteilhaft überwunden sind. Insbesondere kann ein Bedarf an einer Förderkette und einem damit ausgestatteten Palettenband bestehen, welche im Betrieb eine hohe Sicherheit gewährleisten und welche in einem Fahrsteig geringer Bauhöhe eingesetzt werden können, ohne dass hierdurch übermäßige Polygoneffekte provoziert würden und welche einfach zu montieren, zu demontieren und zu warten sind.

Einem solchen Bedarf kann durch den Gegenstand gemäß einem der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird eine Förderkette für ein Palettenband eines Fahrsteigs vorgeschlagen. Die Förderkette weist zumindest mehrere längliche Kettenglieder auf, welche in einer Erstreckungsrichtung der Förderkette mit einem Ketten-Teilungsabstand hintereinander angeordnet sind. Dabei sind in der Erstreckungsrichtung benachbarte Kettenglieder jeweils in einem Gelenkbereich mittels eines Kettenbolzens auf Zug belastbar und quer zu der Erstreckungsrichtung um eine Achse des Kettenbolzens verschwenkbar miteinander gekoppelt.

Die Förderkette weist zudem mehrere längliche Anbindungselemente auf, welche in der Erstreckungsrichtung parallel hintereinander angeordnet sind. Jeweils zwei in der Erstreckungsrichtung benachbarte Anbindungselemente können mit einem Kettenbolzen miteinander gekoppelt werden, welcher zwei in der Erstreckungsrichtung benachbart angeordnete Kettenglieder miteinander koppelt. Die durch den Kettenbolzen miteinander gekoppelten Anbindungselemente sind quer zu der Erstreckungsrichtung um die Achse des Kettenbolzens verschwenkbar gelagert. Jedes der Anbindungselemente ist an einem vorderen Ende mit einem zugeordneten ersten der Kettenbolzen gekoppelt ist und an einem hinteren Ende mit einem zugeordneten zweiten der Kettenbolzen gekoppelt, wobei ein Anbindungselement-Teilungsabstand zwischen dem ersten und dem zweiten Kettenbolzen ein ganzzahlig Vielfaches des Ketten-Teilungsabstandes ist. Ferner weist jedes der Anbindungselemente einen Befestigungsbereich zur Anbindung einer Palette auf.

Unter den Merkmalen Kopplung, koppeln, gekoppelt, wird in der vorliegenden Schrift eine Verbindung verstanden, die Relativbewegungen zwischen den gekoppelten Teilen ermöglicht, die jedoch nicht ohne zusätzlichen Aufwand eine Trennung der gekoppelten Teile zulässt. Ein solcher zusätzlicher Aufwand kann beispielsweise das Lösen einer Schraube, einer Mutter, eines Splintes, das Betätigen einer Schnappeinrichtung oder gar ein irreversibles zerstören eines koppelnden Bauteiles und dergleichen mehr sein, um die Kopplung der Teile aufzulösen.

Durch diese Ausgestaltung wird mittels der Anbindungselemente eine zu den Kettengliedern parallele Kette gebildet, die die Sicherheit der Förderkette entscheidend erhöht. So können beispielsweise bei einem Bruch eines Kettengliedes die dazu parallel angeordneten Anbindungselemente die Förderkette zusammenhalten. Diese aus den Anbindungselementen gebildete, parallele Kette ist im normalen Betrieb in der Erstreckungsrichtung nicht auf Zug belastet, da sämtliche Zugkräfte durch die Kettenglieder aufgenommen beziehungsweise übertragen werden. Nur im Schadenfall eines Kettengliedes oder eines Kettenbolzens im Bereich des Kettengliedes, kann das die Schadenstelle überbrückende Anbindungselement die Zugkräfte übernehmen. Dadurch, dass die Anbindungselemente nicht einfach integraler Bestandteil der Paletten sind, sondern einen Befestigungsbereich zur Anbindung einer Palette aufweisen, kann ein Austausch beschädigter Paletten innerhalb kürzester Zeit durchgeführt werden. Ferner ist durch diesen Aufbau auch ein wesentlich vereinfachter Austausch von Verschleißteilen wie die Lagerbuchsen der Förderkette möglich, da der problemlose Zugang zu diesen Teilen durch die Entfernbarkeit einzelner Paletten aus dem Palettenband gewährleistet ist.

In einer Ausgestaltung des ersten Aspektes kann das vordere Ende des Anbindungselements verschwenkbar und koaxial positioniert mit dem zugeordneten ersten Kettenbolzen gekoppelt sein und das hintere Ende des Anbindungselements verschwenkbar und in der Erstreckungsrichtung linear geführt mit dem zugeordneten zweiten Kettenbolzen gekoppelt sein. In einer möglichen Variante dieser Ausgestaltung kann das hintere Ende des Anbindungselements über eine vorgegebene Distanz verlagerbar linear geführt sein.

Gemäß einem zweiten Aspekt der Erfindung wird ein Palettenband für einen Fahrsteig vorgeschlagen, welches zwei Förderketten und mehrere Paletten aufweist. Die erste und die zweite Förderkette sind gemäß Ausführungsformen des ersten Aspekts der Erfindung ausgebildet. Dabei sind die zwei Förderketten parallel zueinander angeordnet. Die Paletten sind in einer Erstreckungsrichtung der Förderketten hintereinander angeordnet. Jede der Paletten ist an einem ersten seitlichen Ende an einem der Anbindungselemente der ersten Förderkette und an einem entgegengesetzten zweiten seitlichen Ende an einem der Anbindungselemente der zweiten Förderkette befestigt.

Gemäß einem dritten Aspekt der Erfindung wird ein Fahrsteig vorgeschlagen, der ein Palettenband sowie zwei Umlenkeinrichtungen aufweist. Das Palettenband ist gemäß einer Ausführungsform des zweiten Aspekts der Erfindung ausgebildet. Die zwei Umlenkeinrichtungen sind jeweils mit Umlenkkettenrädern zum Umlenken des Palettenbandes in Umlenkbereichen an entgegengesetzten Enden des Fahrsteigs ausgebildet.

Kurz zusammengefasst können mögliche Merkmale und Vorteile von Ausführungsformen der Erfindung unter anderem und ohne die Erfindung einzuschränken als auf nachfolgend beschriebenen Ideen und Erkenntnissen beruhend angesehen werden.

Bei herkömmlichen Palettenbändern für Fahrsteige sind Paletten meist direkt an den Kettengliedern oder an eventuell verlängerten Kettenbolzen der Förderketten angebunden. Meist wurden hierbei Förderketten mit einem verhältnismäßig großen Teilungsabstand eingesetzt, sodass die Länge der Paletten im Wesentlichen dem Teilungsabstand der Förderketten entspricht.

Soll, wie beispielsweise bei dem in der WO 2013/152714 A1 beschriebenen Ansatz, durch Verwendung kurzer Kettenglieder bei den Förderketten ein kurzer Teilungsabstand realisiert werden, werden die Paletten weiterhin direkt an den Kettenbolzen der Förderketten angebunden. Allerdings überspannt eine einzelne Palette die Länge mehrerer Kettenglieder, sodass zwischen einer Ankopplung der Palette an einem vorderen Kettenbolzen und einer Ankopplung der Palette an einem hinteren Kettenbolzen ein oder mehrere Kettenbolzen verblieben, die nicht mit der Palette verbunden sind.

Da es beim Umlenken der Förderkette an einem Umlenkkettenrad bei einer solchen Konfiguration zu einem Längenunterschied zwischen dem entlang des Umfangs des Umlenkkettenrads verlaufenden Bereichs der Förderkette einerseits und der sich dazwischen linear erstreckenden Palette kommt, muss dieser Längenunterschied durch eine geeignete Mechanik ausgeglichen werden. Herkömmlich wird diese Mechanik im Bereich der Anbindung der Paletten an einen oder mehrere der Kettenbolzen, mit denen die Paletten gekoppelt werden sollen, vorgesehen. Der Aufbau einer solchen Mechanik kann dabei komplex und/oder empfindlich sein. Außerdem kann es bei dieser Art der Anbindung der Paletten an die Förderketten aufwendig sein, dass Palettenband zu montieren und/oder beispielsweise im Rahmen eines Wartungsvorgangs zu demontieren und/oder beispielsweise defekte Teile des Palettenbandes zu ersetzen. Zudem können aus funktionstechnischen und montagetechnischen Gründen die Paletten nicht direkt miteinander gekoppelt werden, so dass diese keine zu den Förderketten parallele Kette bilden.

Mit Ausführungsformen der hierin vorgeschlagenen Förderkette bzw. des damit ausgestatteten Palettenbandes kann eine hohe Betriebssicherheit erreicht, ein struktureller Aufbau des Palettenbandes vereinfacht, und/oder das Palettenband verhältnismäßig einfach montiert bzw. einzelne Paletten demontiert werden.

Zu diesem Zweck werden die Paletten nicht direkt mit den Kettengliedern oder Kettenbolzen der Förderkette verbunden. Stattdessen werden spezielle Anbindungselemente vorgesehen, an denen die Paletten befestigt werden können. Die Anbindungselemente bilden hierbei eine Art parallel zu der jeweiligen Förderkette verlaufende zusätzliche Kette, wobei die Anbindungselemente eine um ein Vielfaches größere Länge aufweisen als die Kettenglieder der Förderkette. Anders ausgedrückt weist die mit den Anbindungselementen ausgebildete zusätzliche Kette einen größeren Teilungsabstand auf als die mit Kettengliedern gebildete Kette, wobei der erstgenannte Teilungsabstand hierin nachfolgend auch als Anbindungselement-Teilungsabstand und der zweitgenannte Teilungsabstand hierin nachfolgend auch als Ketten-Teilungsabstand bezeichnet werden. Die Anbindungselemente sind dabei mit Kettenbolzen der Förderketten gekoppelt. Da die Anbindungselemente länger sind als die Kettenglieder der Förderketten, sind die gegenüberliegenden Enden der Anbindungselemente jeweils mit jedem zweiten, jedem dritten oder allgemeiner jedem n-ten (n > 2) Kettenbolzen gekoppelt, d.h., zwischen zwei mit einem Anbindungselement gekoppelten Kettenbolzen befindet sich zumindest ein Kettenbolzen, der nicht mit dem Anbindungselement gekoppelt ist. Der Anbindungselement-Teilungsabstand ist somit ein ganzzahliges Vielfaches des Ketten-Teilungsabstandes.

Dabei sind die Anbindungselemente strukturell geeignet ausgebildet, um die beim Umlenken der Förderketten zwischen den kürzeren Kettengliedern der Förderketten und den im Vergleich hierzu längeren Anbindungselementen auftretenden Längenunterschiede kompensieren zu können. Hierdurch kann die Förderkette auch um Umlenkkettenräder kleinen Durchmessers umgelenkt werden, ohne dass Polygoneffekte unerwünschte Wirkungen hervorrufen könnten.

Indem die Paletten nicht direkt an den Kettenbolzen angebunden, sondern indirekt über die Anbindungselemente mit den Kettenbolzen verbunden sind, kann ferner unter anderem erreicht werden, dass die Paletten und/oder andere Komponenten des Palettenbandes einfacher montiert, demontiert bzw. ausgetauscht werden können.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Es wird darauf hingewiesen, dass einige der möglichen Merkmale und Vorteile der Erfindung hierin mit Bezug auf unterschiedliche Ausführungsformen der Förderkette, des Palettenbandes oder des Fahrsteigs einerseits bzw. unterschiedliche Ausführungsformen eines Verfahrens zum Montieren einer Förderkette, eines Verfahrens zum Austauschen eines Anbindungselements in einer Förderkette oder eines Verfahrens zum Montieren eines Palettenbandes für einen Fahrsteig beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.
Fig. 1 zeigt eine grobschematische Längsschnittansicht durch einen Fahrsteig.
Fig. 2 zeigt eine perspektivische Ansicht eines Teils eines Palettenbandes für einen Fahrsteig mit einer Förderkette gemäß einer Ausführungsform der vorliegenden Erfindung.
Fig. 3 zeigt eine weitere perspektivische Ansicht eines Teils des in Fig. 1 dargestellten Förderbandes teilweise in Explosionsansicht.
Fig. 4a-c zeigen einen Teilabschnitt einer Förderkette gemäß einer Ausführungsform der vorliegenden Erfindung als perspektivische Explosionsansicht, als perspektivische Frontansicht bzw. als perspektivische Rückansicht.

Die Figuren sind lediglich schematisch und nicht maßstabsgetreu. Gleiche Bezugszeichen bezeichnen in den verschiedenen Figuren gleiche oder gleichwirkende Merkmale.

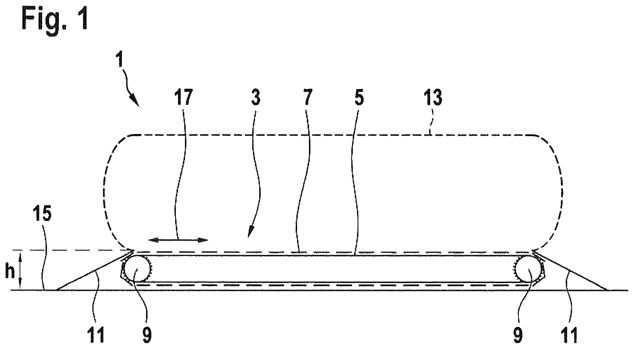

In Fig. 1 ist grob schematisch ein Fahrsteig 1 dargestellt, mithilfe dessen Passagiere entlang eines horizontalen Verfahrwegs transportiert werden können. Der Fahrsteig 1 verfügt über ein Palettenband 3, dessen betretbarer, nach oben gerichteter Anteil sich entlang des Verfahrwegs in einer Erstreckungsrichtung 17 erstreckt. Dieser betretbare Anteil des Palettenbandes 3 wird im Betrieb des Fahrsteigs 1 in einer Vorlaufrichtung bewegt. Das Palettenband 3 ist ringförmig geschlossen beziehungsweise umlaufend angeordnet und wird an gegenüberliegenden Enden des Fahrsteigs 1 mithilfe von Umlenkkettenrädern 9 umgelenkt, sodass ein nach unten gerichteter Anteil des Palettenbandes in einer Rücklaufrichtung zurückbewegt wird. Um das Palettenband 3 einfach und stufenfrei betreten zu können, sind in einem Eingangsbereich sowie in einem Ausgangsbereich jeweils schräge Rampen 11 vorgesehen. Ferner ist entlang des Verfahrwegs ein Handlauf 13 angeordnet, der aus Übersichtlichkeitsgründen lediglich mit unterbrochener Linie dargestellt ist.

Das Palettenband 3 besteht im Wesentlichen aus zwei Förderketten 5 sowie mehreren an diesen Förderketten 5 gehaltenen Paletten 7. Die Förderketten 5 sind dabei parallel zueinander und bezogen auf eine Breitenrichtung (senkrecht zur Bildebene) des Fahrsteigs 1 an gegenüberliegenden Seiten des Fahrsteigs 1 angeordnet. Jede Förderkette 5 ist aus einer Vielzahl von Kettengliedern zusammengesetzt, welche mithilfe von Kettenbolzen schwenkbar miteinander gekoppelt sind. Die Paletten 7 sind mechanisch mit den beiden Förderketten 5 verbunden, so dass durch ein Bewegen der Förderketten 5 auch die Paletten 7 entlang des Verfahrwegs bewegt werden.

Im dargestellten Beispiel ist der Fahrsteig 1 auf einem Boden 15 aufgebaut. Dabei sollte eine Bauhöhe h möglichst gering sein, beispielsweise um eine Länge bzw. Neigung der Rampen 11 zu begrenzen. Aufgrund einer solchen angestrebten geringen Bauhöhe h sollte auch der Durchmesser der Umlenkkettenräder 9 möglichst klein sein.

Bei herkömmlichen Fahrsteigen entspricht eine Länge der die Förderkette bildenden Kettenglieder, gemessen entlang der Erstreckungsrichtung, im Wesentlichen einer Länge der Paletten. Anders ausgedrückt entspricht ein Teilungsabstand der herkömmlichen Förderkette im Wesentlichen einem Teilungsabstand des damit gebildeten herkömmlichen Palettenbandes. Auf diese Weise ist eine Palette an ihrem vorderen und ihrem hinteren Ende jeweils mit einem der Kettenbolzen an den entgegengesetzten Enden des zu der Palette 7 parallel verlaufenden Kettengliedes verbunden.

Beim Umlenken der relativ langen Kettenglieder einschließlich der darin angebundenen Paletten 7 kann es jedoch zu spürbaren Polygoneffekten kommen, wenn der Teilungsabstand der Förderkette 5 bzw. des Palettenbandes 3 nicht erheblich kleiner ist als ein Durchmesser der Umlenkkettenräder 9. Insbesondere wurde erkannt, dass bei Umlenkkettenrädern 9, die als Zahnräder ausgebildet sind und bei denen ein Zahn jeweils in eine in einem Kettenglied gebildete Ausnehmung eingreifen soll, spürbare Polygoneffekte auftreten, sofern das Umlenkkettenrad 9 weniger als 17 Zähne aufweist.

Die vorliegende Erfindung betrifft einen Fahrsteig 1 und dessen Komponenten, wie insbesondere das Palettenband 3 und die Förderkette 5, bzw. ein Verfahren zum Montieren oder Reparieren solcher Komponenten, bei denen der Fahrsteig 1 aufgrund seiner strukturellen und funktionalen Eigenschaften mit einer geringen Bauhöhe h bereitgestellt werden kann, ohne dass sich beim Umlenken des Palettenbandes 3 inakzeptable starke Polygoneffekte einstellen. Ferner erhöht die vorliegende Erfindung aufgrund ihrer spezifischen strukturellen Ausprägungen die Betriebssicherheit des Fahrsteiges 1. Außerdem lassen sich die Förderkette 5 bzw. das damit gebildete Palettenband 3 einfach montieren und darin enthaltene Bauteile bei Bedarf einfach austauschen.

Nachfolgend werden mögliche Details und Vorteile von Ausführungsformen der vorliegenden Erfindung unter Bezugnahme auf die Figuren beschrieben. Dabei wird zunächst hauptsächlich auf strukturelle bzw. funktionelle Eigenschaften der Förderkette 5, des damit ausgebildeten Palettenbandes 3 oder des hiermit letztlich bereitgestellten Fahrsteigs 1 eingegangen. Anschließend wird auf mögliche Ausgestaltungen eines Verfahrens zum Montieren einer solchen Förderkette 5 bzw. eines solchen Palettenbandes 3 sowie auf ein Verfahren zum Austauschen von Anbindungselementen in einer solchen Förderkette 5 eingegangen.

Es wird darauf hingewiesen, dass Merkmale, die für Vorrichtungen, wie die Förderkette 5, das Palettenband 3 oder den Fahrsteig 1, beschrieben sind, entsprechende Auswirkungen auf die jeweiligen Verfahren zu deren Montage bzw. Reparatur haben können und umgekehrt Merkmale der hierin beschriebenen Verfahren wiederum mit Eigenschaften der dadurch gebildeten Vorrichtungen korrelieren können.

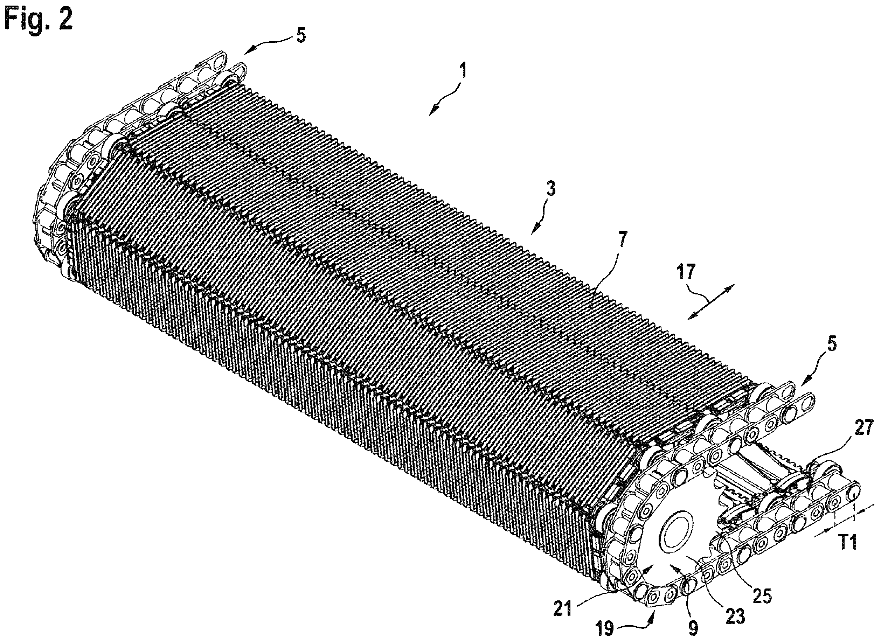

In Fig. 2 ist ein Teil eines Fahrsteigs 1 in einem Umlenkbereich 19 perspektivisch dargestellt. Das Palettenband 3 wird in dem Umlenkbereich 19 mittels einer Umlenkeinrichtung 21 von einer Vorlaufrichtung in eine Rücklaufrichtung oder umgekehrt umgelenkt. Die Umlenkeinrichtung 21 verfügt hierzu über Umlenkkettenräder 9 in Form von Zahnrädern 23, welche an gegenüberliegenden Seiten des Palettenbandes 3 angeordnet sind und mit dort verlaufenden Förderketten 5 zusammenwirken. Die Umlenkkettenräder 9 weisen einen kleinen Durchmesser von beispielsweise weniger als 40 cm, vorzugsweise weniger als 30 cm und stärker bevorzugt weniger als 25 cm auf, so dass der gesamte Fahrsteig 1 eine geringe Bauhöhe h von beispielsweise deutlich unter 50 cm, vorzugsweise sogar unter 35 cm, aufweisen kann.

Da ein Ketten-Teilungsabstand T1 bei den Förderketten 5 jedoch kurz ist, können die an dem Zahnrad 23 ausgebildeten Zähne 25, die in einzelne Kettenglieder 27 der Förderkette 5 eingreifen, eng benachbart zueinander angeordnet sein. Dementsprechend können auch bei dem kleinen Umlenkkettenrad 9 wenigstens 17 Zähne 25 am Außenumfang vorgesehen sein, so dass Polygoneffekte beim Umlaufen der Förderketten 5 vernachlässigbar bleiben können.

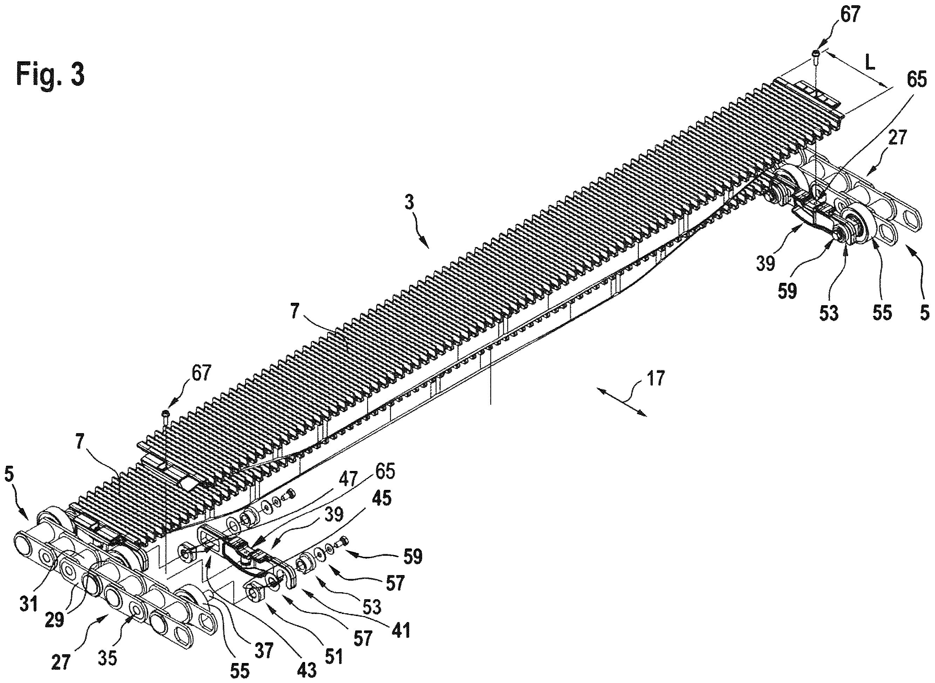

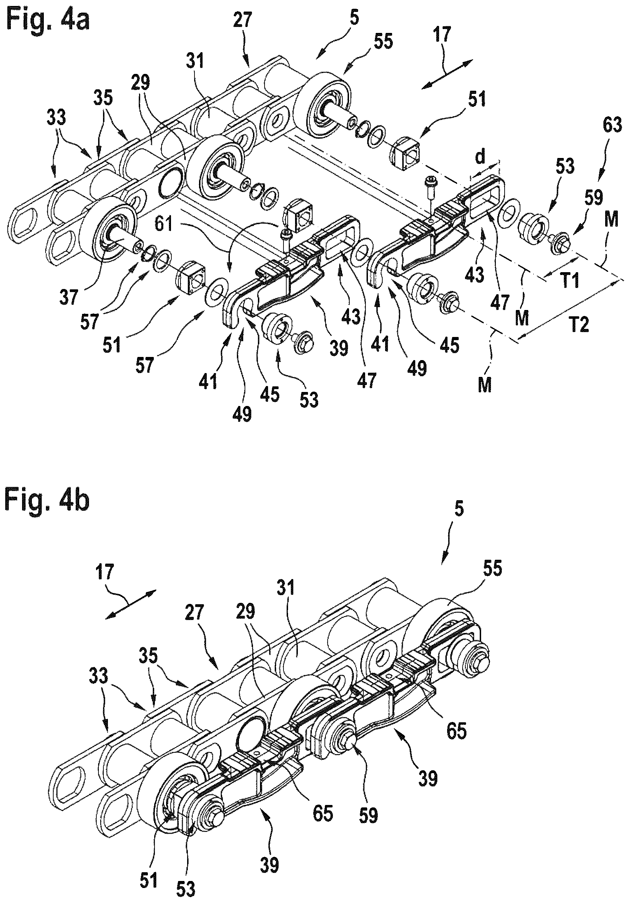

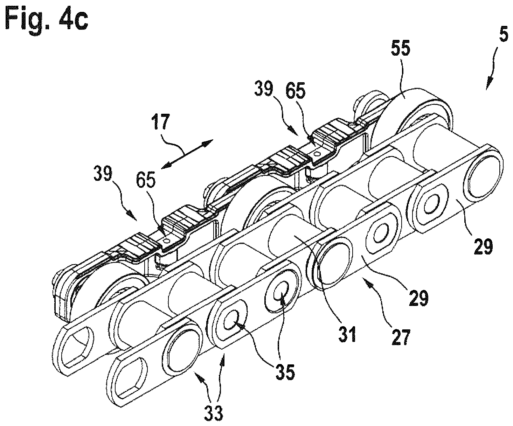

In den Fig. 3 und 4a bis 4c sind Details des Palettenbandes 3 sowie der darin eingesetzten Förderkette 5 perspektivisch dargestellt, teilweise in Explosionsansichten. Nachfolgend werden diese gemeinsam beschrieben.

Die Förderkette 5 weist mehrere längliche Kettenglieder 27 auf. Die Kettenglieder 27 sind entlang der Erstreckungsrichtung 17 der Förderkette 5 hintereinander angeordnet. Jedes Kettenglied 27 ist im dargestellten Beispiel (siehe insbesondere Fig. 4a) mit zwei parallel angeordneten, blechartigen Laschen 29 ausgebildet. Die Laschen 29 sind über Hülsen 31 voneinander beabstandet. In der Erstreckungsrichtung 17 benachbarte Kettenglieder 27 sind jeweils in einem Gelenkbereich 33 mittels eines Kettenbolzens 35 miteinander verbunden. Die Förderkette 5 ist hierdurch auf Zug hochbelastbar und quer zu der Erstreckungsrichtung 17 um jeweilige Mittellängsachsen M der Kettenbolzen 35 verschwenkbar.

Ein Abstand der Mittellängsachsen M zwischen zwei benachbarten Kettenbolzen 35 an der Förderkette 5 entspricht dem Ketten-Teilungsabstand T1. Um die gewünschten vernachlässigbaren Polygoneffekte beim Umlenken der Förderkette 5 zu erreichen, sind die einzelnen Kettenglieder 27 der Förderkette 5 so kurz, dass der Ketten-Teilungsabstand T1 vorzugsweise kürzer als 10 cm, stärker bevorzugt kürzer als 6 cm und insbesondere 50 mm ± 2 mm, beträgt.

Bei herkömmlichen Palettenbändern 3 sind die Paletten 7 meist direkt mit den Kettenbolzen 35 der Förderketten 5 verbunden. Beispielsweise sind die Paletten 7 an seitlichen Stirnflächen direkt mit über die Förderketten 5 seitlich überstehenden, verlängerten Kettenbolzen 35 verbunden.

Im Gegensatz hierzu sind bei dem hierin vorgeschlagenen Palettenband 3 an der Förderkette 5 zusätzliche längliche Anbindungselemente 39 vorgesehen. Die Anbindungselemente 39 sind ähnlich wie die Kettenglieder 27 in der Erstreckungsrichtung 17 bzw. parallel zu dieser hintereinander angeordnet. Jeweils zwei in der Erstreckungsrichtung 17 benachbarte Anbindungselemente 39 sind hierbei quer zur Erstreckungsrichtung 17 schwenkbar miteinander gekoppelt. Eine solche Kopplung kann beispielsweise über verlängerte Kettenbolzen 37 der Förderkette 5 erfolgen, die seitlich über die Kettenglieder 27 überstehen und mit denen die Anbindungselemente 39 verbunden werden können. Die Anbindungselemente 39 weisen ferner Befestigungsbereiche 65 zur Anbindung einer Palette 7 auf. Dadurch, dass die Anbindungselemente 39 nicht einfach integraler Bestandteil der Paletten 7 sind, sondern einen Befestigungsbereich 65 zur Anbindung einer Palette 7 aufweisen, kann ein Austausch beschädigter Paletten 7 innerhalb kürzester Zeit durchgeführt werden. Ferner ist durch diesen Aufbau auch ein wesentlich vereinfachter Austausch von Verschleißteilen wie beispielsweise Gleitelementen 51 und Buchsen 53 der Förderkette 5 möglich, da der problemlose Zugang zu diesen Teilen durch die Entfernbarkeit einzelner Paletten 7 aus dem Palettenband 3 gewährleistet ist.

Insbesondere kann jedes der Anbindungselemente 39 an einem vorderen Ende 41 mit einem zugeordneten ersten der verlängerten Kettenbolzen 37 gekoppelt sein und an einem hinteren Ende 43 mit einem zugeordneten zweiten der verlängerten Kettenbolzen 37 gekoppelt sein.

Ein Abstand in Erstreckungsrichtung 17 zwischen den Mittellängsachsen M des ersten und des zweiten verlängerten Kettenbolzens 37 wird hierin als Anbindungselement-Teilungsabstand T2 bezeichnet. Bei der hierin beschriebenen Förderkette 5 soll dieser Anbindungselement-Teilungsabstand T2 ein ganzzahlig Vielfaches des Ketten-Teilungsabstandes T1 sein, das heißt T2 = n ^{∗} T1 mit n = 2, 3, 4, .... Im dargestellten Beispiel ist der Anbindungselement-Teilungsabstand T2 das Dreifache des Ketten-Teilungsabstandes, das heißt T2 = 3 ^{∗} T1. Mit anderen Worten sollen die Anbindungselemente 39 in etwa um ein ganzzahlig Vielfaches, das heißt beispielsweise um das Doppelte oder das Dreifache, länger sein als die Kettenglieder 27.

Hierdurch ergibt sich, dass jedes der Anbindungselemente 39 an seinen entgegengesetzten Enden 41, 43 nicht an direkt benachbarten der Kettenbolzen 35, 37 angebunden ist. Stattdessen befindet sich zwischen zwei Kettenbolzen 35, 37, an denen eines der jeweiligen Enden 41, 43 des Anbindungselements 39 angebunden ist, zumindest ein Kettenbolzen 35, 37, der nicht mit dem Anbindungselement 39 gekoppelt ist. Anders ausgedrückt ist jedes der Anbindungselemente 39 nur mit jedem zweiten, jedem dritten oder allgemein jedem n-ten der Kettenbolzen 35, 37 gekoppelt.

Im dargestellten Beispiel sind die Anbindungselemente 39 an ihren Enden 41, 43 mit jedem dritten der Kettenbolzen 35, 37 gekoppelt, wobei diese Kettenbolzen 35, 37 dann als verlängerte Kettenbolzen 37 ausgeführt sind. Zwischen solchen verlängerten Kettenbolzen 37 befinden sich jeweils zwei kürzere Kettenbolzen 35, die lediglich die Kettenglieder 27 der Förderkette 5 verbinden, nicht aber mit dem hierzu parallelen verlaufenden Anbindungselement 39 verbunden sind.

Bei dem beschriebenen Palettenband 3 sind die Paletten 7 nicht direkt mit der Förderkette 5 verbunden. Stattdessen sind die Paletten 7 jeweils über die Befestigungsbereiche 65 mittels Befestigungsmitteln 67 an den Anbindungselementen 39 angebracht und indirekt über diese Anbindungselemente 39 mit der Förderkette 5 verbunden.

Eine Länge L der Paletten 7, gemessen in der Erstreckungsrichtung 17, kann dabei in etwa dem Anbindungselement-Teilungsabstand T2 entsprechen und somit um ein Vielfaches länger sein als die Länge der Kettenglieder 27 und deren Ketten-Teilungsabstand T1. Im Allgemeinen sind die Paletten 7 hierbei geringfügig kürzer als der Anbindungselement-Teilungsabstand T2, damit zwischen benachbarten Paletten 7 ein kleiner Spalt verbleibt und sich die Paletten 7 somit relativ zu einander verschieben können. Konkret kann beispielsweise für eine Förderkette 5 mit einem Ketten-Teilungsabstand T1 von 50 mm eine Palettenlänge von knapp 150 mm eingesetzt werden, so dass jede der Paletten 7 mehrere Kettenglieder 27 überspannt bzw. "übergreift".

Beim Umlenken eines solchen Palettenbandes 3 in einem Umlenkbereich 19 fährt die Förderkette 5 mit ihren Kettengliedern 27 dann gewissermaßen ein Bogenmaß eines Teilkreises entlang des Außenumfangs eines der Umlenkkettenräder 9 ab. Die langen Paletten 7 hingegen erstrecken sich entlang von Sehnen zwischen den von ihnen übergriffenen Kettengliedern 27. Anders ausgedrückt erstrecken sich die Paletten 7 nicht entlang des beim Umlenken von den Kettenbolzen 35, 37 definierten Polygonzuges, sondern entlang gerader Linien, die diejenigen der Kettenbolzen 35, 37 verbinden, an denen die Anbindungselemente 39 angebunden sind. Die Länge dieser Sehnen ist kürzer als die Länge des Umfangs bzw. des genannten Polygonzuges. Dies kann als Sehnenverkürzung bezeichnet werden.

Um auftretende Sehnenverkürzungen aufgrund der im Vergleich zu den Kettengliedern 27 längeren Anbindungselemente 39 kompensieren zu können, ist eine spezielle Ausgestaltung der Anbindungselemente 39 bzw. der Art und Weise, wie diese an die Förderkette 5 angebunden sind, notwendig. Insbesondere sollte zumindest eines der Enden 41, 43 jedes Anbindungselements 39 derart an die Förderkette 5 gekoppelt sein, dass ein Längenausgleich zur Kompensierung der Sehnenverkürzung geschaffen werden kann.

Zum besseren Verständnis werden nachfolgend die mit einem spezifischen Anbindungselement 39 beschriebenen, verlängerten Kettenbolzen 37 als zugeordnete Kettenbolzen 37 bezeichnet. Ferner sind die verlängerten Kettenbolzen 37, die mit einem bestimmten Bereich des Anbindungselementes zusammenwirken, als erster der Kettenbolzen 37 und zweiter der Kettenbolzen 37 beziehungsweise als erster Kettenbolzen 37 und zweiter Kettenbolzen 37 bezeichnet, um deren Anordnung in Bezug auf das zugeordnete Anbindungselement 39 beschreiben zu können. Die Enden des Anbindungselementes 39 werden aus demselben Grund als vorderes Ende 41 und hinteres Ende 43 bezeichnet, wobei diese Bezeichnungen keine Bewegungsrichtung des Anbindungselementes 39 in der Erstreckungsrichtung vorgeben sollen.

Um die Sehnenverkürzung zu kompensieren, kann beispielsweise das vordere Ende 41 eines Anbindungselements 39 schwenkbar und koaxial positioniert mit dem ersten Kettenbolzen 37 gekoppelt sein.

Anders ausgedrückt kann das vordere Ende 41 des Anbindungselements 39 mit dem ersten Kettenbolzen 37 derart gekoppelt sein, dass das Anbindungselement 39 um die Mittellängsachse M des ersten Kettenbolzens 37 verschwenkbar ist, aber in Richtungen quer zur Mittellängsachse des Kettenbolzens 37 relativ zu dem Kettenbolzen 37 positionsgebunden ist. Das vordere Ende 41 des Anbindungselements 39 ist somit zwar um die Achse des Kettenbolzens 37 schwenkbar mit der Förderkette 5 verbunden, kann jedoch relativ zu dieser nicht linear verlagert werden. Anders ausgedrückt kann das Anbindungselement 39 an seinem vorderen Ende 41 derart formschlüssig mit dem ersten Kettenbolzen 37 verbunden sein, dass lediglich Schwenkbewegungen um die Mittellängsachse M des Kettenbolzens 37 möglich sind, jedoch keine translatorischen Bewegungen in der Erstreckungsrichtung 17 relativ zu dem Kettenbolzen 37 zugelassen werden.

Im Gegensatz hierzu kann das hintere Ende 43 jedes der Anbindungselemente 39 sowohl schwenkbar als auch in der Erstreckungsrichtung 17 über eine vorgegebene Distanz d verlagerbar linear geführt mit dem zweiten Kettenbolzen 37 gekoppelt sein.

Anders ausgedrückt kann das hintere Ende 43 des Anbindungselements 39 mit dem zweiten Kettenbolzen 37 derart gekoppelt sein, dass das Anbindungselement 39 um die Mittellängsachse M des zweiten Kettenbolzens 37 verschwenkbar ist und zusätzlich in einer Richtung quer zu dieser Mittellängsachse M relativ zu dem Kettenbolzen 37 über die vorgegebene Distanz d verlagerbar ist und dabei aufgrund der Ausgestaltung der Kopplung zwischen dem Anbindungselement 39 und dem zweiten Kettenbolzen 37 in seiner linearen Bewegung geführt ist. Nochmals anders ausgedrückt kann die Anbindung des hinteren Endes 43 des Anbindungselements 39 an den zweiten Kettenbolzen 37 derart ausgestaltet sein, dass sich dieses hintere Ende 43 in der Richtung quer zu der Mittellängsachse M des Kettenbolzens 37 translatorisch relativ zu dem zweiten Kettenbolzen 37 bewegen kann.

Dabei soll eine lineare Bewegung über die Distanz d zulässig sein. Diese Distanz d kann der Länge der oben genannten Sehnenverkürzung entsprechen oder größer als diese sein. Anders ausgedrückt kann die Distanz d derjenigen Länge entsprechen, um die sich die Sehne zwischen dem ersten und dem zweiten Kettenbolzen 37 vom Umfang entlang eines Kreissegments unterscheidet, wenn die Förderkette 5 um das Kreissegment umgelenkt wird. Beispielsweise kann die Distanz d wenigstens 150% oder vorzugsweise wenigstens 200% des Durchmessers des zweiten Kettenbolzens 37 entsprechen.

Mit den hierin beschriebenen Anbindungselementen 39 und deren Anbindung an die Förderkette 5 wird gewissermaßen eine parallele Kette geschaffen, deren Teilungsabstand wesentlich größer als derjenige der Kettenglieder 27 ist und im Wesentlichen der Länge der Paletten 7 entspricht. Aufgrund der strukturellen und funktionalen Ausgestaltung der Anbindungselemente 39 an ihren ersten und zweiten Enden 41, 43 und der Art, wie diese Enden mit den Kettenbolzen 37 der Förderkette 5 gekoppelt sind, kann erreicht werden, dass eine Sehnenverkürzung, wie sie beim Umlenken des Palettenbandes 3 bewirkt wird, an den Anbindungselementen 39 kompensiert werden kann.

Gemäß einer Ausführungsform kann jedes der Anbindungselemente 39 an zumindest einem seiner Enden 41, 43 in einer Richtung quer zu der Erstreckungsrichtung 17 und quer zu der Achse desjenigen Kettenbolzens 37, mit dem das jeweilige Ende 41, 43 gekoppelt ist, lösbar mit dem zugeordneten Kettenbolzen 37 gekoppelt sein

Mit anderen Worten können die Anbindungselemente 39 derart ausgestaltet sein, dass sie an einem ihrer Enden von dem zugeordneten, verlängerten Kettenbolzen 37 gelöst werden können, indem dieses Ende 41, 43 in der Richtung quer zu der Erstreckungsrichtung 17 und quer zu der Achse des Kettenbolzens 37 verlagert wird. Anders ausgedrückt sollte eines der Enden 41, 43 des Anbindungselements 39 strukturell derart ausgestaltet sein, dass das Anbindungselement 39 aus der Erstreckungsrichtung 17 heraus nach oben oder unten verschwenkt werden kann und dabei von dem zugeordneten Kettenbolzen 37 gelöst werden kann.

Durch eine solche insbesondere durch ein Verschwenken des Anbindungselements 39 bewirkbare Lösbarkeit von dem zugeordneten Kettenbolzen 37 kann das Anbindungselement 39 zumindest an dem betreffenden Ende 41, 43 aus der Kopplung mit der Förderkette 5 gelöst werden, ohne dass das Anbindungselement 39 in axialer Richtung von dem zugeordneten Kettenbolzen 35 abgezogen werden müsste. Wie weiter unten detaillierter dargestellt, kann sich hierdurch eine einfache Möglichkeit realisieren lassen, die hierin vorgestellte Förderkette 5 mitsamt den daran angeordneten Anbindungselementen 39 in einfacher Weise montieren bzw. demontieren zu können oder einzelne Anbindungselemente 39 austauschen zu können.

Gemäß einer Ausführungsform weist das Anbindungselement 39 am vorderen und am hinteren Ende 41, 43 jeweils eine Durchgangsöffnung 45, 47 auf, durch die hindurch sich im mit dem jeweils zugeordneten Kettenbolzen 37 gekoppelten Zustand der jeweilige Kettenbolzen 37 erstreckt. Dabei weist das Anbindungselement 39 an einer dieser Durchgangsöffnungen 45 eine seitliche Öffnung 49 derart auf, dass nach dem Entfernen einer Buchse 53 der zugehörige Kettenbolzen 37 aus der Durchgangsöffnung 45, 47 heraus durch die seitliche Öffnung 49 heraus bewegt und dadurch aus der Kopplung mit dem zugeordneten Kettenbolzen 37 gelöst werden kann.

Mit anderen Worten sollen an den gegenüberliegenden Enden 41, 43 des Anbindungselements 39 jeweils Durchgangsöffnungen 45, 47 ausgebildet sein, durch welche sich die vorzugsweise verlängerten Kettenbolzen 37 hindurch erstrecken können. Diese Durchgangsöffnungen 45, 47 können derart dimensioniert sein, dass es beispielsweise bei der vorderen Durchgangsöffnung 45 zu einem teilweisen Formschluss mit dem zylinderförmigen verlängerten Kettenbolzen 37 kommt. Dementsprechend kann die vordere Durchgangsöffnung 45 zumindest bereichsweise rund und mit in etwa dem gleichen Durchmesser wie der Durchmesser des verlängerten Kettenbolzens 37 ausgestaltet sein. Die hintere Durchgangsöffnung 47 in dem Anbindungselement 39 kann vorzugsweise länglich ausgestaltet sein, beispielsweise rechteckförmig oder quasirechteckförmig. Eine Länge dieser hinteren Durchgangsöffnung 47 in Erstreckungsrichtung 17 kann dabei der Distanz d entsprechen, um die sich das Anbindungselement 39 relativ zu dem zugeordneten Kettenbolzen 35 verlagern können soll. Eine Höhe dieser hinteren Durchgangsöffnung 47 kann in etwa dem Durchmesser des zugeordneten Kettenbolzens 35 entsprechen.

Dabei kann zumindest eine der beiden Durchgangsöffnungen 45, 47 nicht ringförmig geschlossen sein, sondern an einer Seite offen sein. Anders ausgedrückt kann ein Ende 41, 43 des Anbindungselements 39 mit einer Durchgangsöffnung 45 in Form eines seitlich offenen, weitgehend runden Auges ausgestaltet sein. Aufgrund der seitlichen Öffnung 49 kann diese Durchgangsöffnung 45 beispielsweise U-förmig oder Ω-förmig geöffnet sein.

Durch die seitliche Öffnung 49 an der Durchgangsöffnung 45 kann die weiter oben beschriebene Lösbarkeit des Anbindungselements 39 durch ein Verschwenken des Anbindungselements 39 erreicht werden. Beispielsweise kann zum Montieren eines Anbindungselements 39 sein hinteres Ende 43 axial auf den zugeordneten Kettenbolzen 37 aufgeschoben werden und anschließend das vordere Ende 41 mit dem anderen zugeordneten Kettenbolzen 37 gekoppelt werden, indem das Anbindungselement 39 nach unten geschwenkt wird und dabei der zugehörige Kettenbolzen 37 durch die seitliche Öffnung 49 hindurch in die Durchgangsöffnung 45 gelangt, um die gewünschte Kopplung zwischen der aus Kettenglieder 27 gebildeten Kette und dem Anbindungselement 39 zu bewirken.

Gemäß einer Ausführungsform können dabei benachbarte Anbindungselemente 39 einander in der Erstreckungsrichtung 17 überlappen und das hintere Ende 43 eines vorderen Anbindungselements 39 sowie das vordere Ende 41 eines hinteren Anbindungselements 39 jeweils mit einem gemeinsamen Kettenbolzen 37 gekoppelt sein.

Mit anderen Worten können sich die Anbindungselemente 39 der hierin beschriebenen Förderkette 5 ähnlich wie die Laschen 29 der Kettenglieder 27 in Erstreckungsrichtung 17 überlappen und benachbarte Anbindungselemente 39 jeweils mit einem ihrer Enden 41, 43 an einem gemeinsamen Kettenbolzen 37 angekoppelt sein.

Alle Anbindungselemente 39 der Förderkette 5 können hierbei vorzugsweise identisch ausgebildet sein, d.h. eine gleiche Geometrie aufweisen. Die durch die Anbindungselemente 39 ausgebildete Kette kann somit einfach aufgebaut sein und es braucht lediglich ein Typ von Anbindungselementen 39 produziert, gelagert und letztendlich montiert werden. Für die beiden parallel zueinander verlaufenden und einander gegenüberliegenden Förderketten 5 eines Palettenbandes 3 können zwei spiegelsymmetrisch ausgebildete Typen von Anbindungselementen 39 (rechts/links) erforderlich sein.

Beispielsweise können die Anbindungselemente 39 als gekröpfte Glieder ausgeformt sein, so dass beispielsweise alle hinteren Enden 43 der Anbindungselemente 39 an den zugeordneten Kettenbolzen 37 näher zu den Kettengliedern 27 angeordnet sind als die an demselben Kettenbolzen 37 angeordneten vorderen Enden 41 benachbarter Anbindungselemente 39.

In einer solchen Konfiguration können die hinteren Enden 43 der Anbindungselemente 39 zur Montage der Förderkette 5 mit der ringförmig geschlossenen Durchgangsöffnung 47 axial über einen zugeordneten Kettenbolzen 37 geschoben werden. Nachdem alle Anbindungselemente 39 auf diese Weise an den zugeordneten Kettenbolzen 37 angebracht wurden, können die Kopplungsbolzen 39 dann verschwenkt werden, um mit ihrem vorderen Ende 41 in einen benachbarten verlängerten Kettenbolzen 37 eingreifen zu können. Auf diese Weise können die Anbindungselemente 39, obwohl sie in der Erstreckungsrichtung einander überlappen, quasi zu einer Kette parallel zu den Kettengliedern 27 an der Förderkette 5 montiert werden.

Gemäß einer Ausführungsform kann das hintere Ende 43 der Anbindungselemente 39 jeweils über ein Gleitelement 51 an dem zugeordneten Kettenbolzen 35, 37 gehalten sein. Das Gleitelement 51 kann dabei zwischen einander gegenüberliegenden Oberflächen des Anbindungselements 39 einerseits und des Kettenbolzens 37 andererseits zwischengelagert sein.

Mit anderen Worten können die Anbindungselemente 39 jeweils an ihrem hinteren Ende 43 über das Gleitelement 51 mit dem zugeordneten Kettenbolzen 37 gekoppelt sein. Das Gleitelement 51 kann dabei in bestimmten Richtungen für einen gewünschten Kraftschluss oder in bestimmten Richtungen für einen bestimmten Formschluss zwischen dem verlängerten Kettenbolzen 37 einerseits und beispielsweise Innenoberflächen im Bereich der Durchgangsöffnung 47 in dem Anbindungselement 39 sorgen.

Gemäß einer konkreten Ausführungsform kann dabei das Anbindungselement 39 an seinem hinteren Ende 43 eine Langloch-artig ausgeführte Durchgangsöffnung 47 mit zueinander parallelen Innenoberflächen aufweisen. Das Gleitelement 51 kann dann eine Außenkontur mit zueinander parallelen und an die Innenoberflächen der Durchgangsöffnung 47 angrenzenden Außenflächen aufweisen.

Anders ausgedrückt kann das Gleitelement 51 beispielsweise eine rechteckige oder quasirechteckige Außenkontur aufweisen und die Durchgangsöffnung 47 in dem hinteren Ende 43 des Anbindungselements 39 kann ebenfalls rechteckig bzw. quasi-rechteckig sein. Eine Höhe des Gleitelements 51 kann dabei einer Höhe der Durchgangsöffnung 47 entsprechen. Eine Länge des Gleitelements 51 sollte jedoch kürzer als eine Länge der Durchgangsöffnung 47 sein. Beispielsweise kann die Länge des Gleitelements 51 weniger als 50% oder weniger als 30% der Länge der Durchgangsöffnung betragen. Durch eine solche Ausgestaltung kann das Gleitelement 51 sich linear innerhalb der Durchgangsöffnung 47 bewegen, beispielsweise um die oben beschriebene Distanz d. Mit anderen Worten kann das Gleitelement 51 als Vierkant-Bauteil ausgebildet sein und mit der in dem Anbindungselement 39 als Langloch ausgebildeten Durchgangsöffnung 47 eine Linearführung bilden.

Anders ausgedrückt kann durch die Ausgestaltung des Gleitelements 51 und der Durchgangsöffnung 47 eine lineare Führung für das Anbindungselement 39 bewirkt werden, um bei einem Umlenken der Förderkette 5 die auftretende Sehnenverkürzung kompensieren zu können.

Aufgrund der Ausgestaltung des Gleitelements 51 und der Durchgangsöffnung 47 mit zueinander parallelen Oberflächen kann dabei eine Kontaktfläche, an der das Gleitelement 51 die Innenoberfläche der Durchgangsöffnung 47 an dem Anbindungselement 39 kontaktiert, vergrößert werden. Auf diese Weise kann eine Flächenpressung bei der Anbindung des Anbindungselements 39 an dem zugeordneten Kettenbolzen 37 verringert werden. Hierdurch lässt sich beispielsweise Verschleiß an der Förderkette 5 reduzieren.

Wie bereits beschrieben, ist das vordere Ende 41 des Anbindungselements 39 über eine Buchse 53 an dem zugeordneten Kettenbolzen 35 gehalten.

Die Buchse 53 kann dabei zwischen einer Außenoberfläche des zugeordneten Kettenbolzens 37 und einer Innenoberfläche im Bereich der Durchgangsöffnung 45 des Anbindungselements 39 zwischengelagert sein. Die Buchse 53 kann ringförmig geschlossen sein, insbesondere kreisförmig oder zylinderförmig ausgestaltet sein. Die Buchse 53 kann bei der Montage der Förderkette 5 beispielsweise nachdem das vordere Ende 41 des Anbindungselements 39 mit seiner seitlichen Öffnung 49 über den zugeordneten Kettenbolzen 37 geschwenkt wurde, in einer axialen Richtung auf den verlängerten Kettenbolzen 37 aufgeschoben werden. Hierdurch kann ein Formschluss zwischen dem verlängerten Kettenbolzen 37 und dem Anbindungselement 39 im Bereich seiner vorderen seitlich offenen Durchgangsöffnung 45 generiert werden.

Gemäß einer Ausführungsform kann das Gleitelement 51 und/oder die Buchse 53 zumindest teilweise aus einem Polymerwerkstoff gefertigt sein, das heißt aus Polymerwerkstoff bestehen oder beispielsweise mit einem Polymerwerkstoff beschichtet sein. Vorzugsweise können Polymerwerkstoffe eingesetzt werden, welche einerseits eine ausreichende Festigkeit aufweisen, aber welche andererseits auch ausreichende Gleiteigenschaften zwischen dem Gleitelement 51 bzw. der Buchse 53 einerseits und den zu koppelnden und sich relativ zu diesen Komponenten verschwenkend bewegenden zugeordneten Kettenbolzen 35 und Anbindungselementen 39 andererseits zulassen. Beispielsweise können als Polymerwerkstoffe Duroplaste oder Thermoplaste wie PA, PMMA, POM, GFK, CFK, PVC, PTFE und dergleichen mehr eingesetzt werden.

Gemäß einer Ausführungsform können die Anbindungselemente 39 aus Metall gefertigt sein. Hierdurch können die Anbindungselemente 39 eine ausreichende mechanische Stabilität erhalten, um als Zwischenglied zwischen den daran angebrachten Paletten 7 und den miteinander gekoppelten Kettengliedern 27 der Förderkette 5 wirken zu können und beispielsweise bei einem Bruch eines Kettengliedes Zugkräfte der Förderkette zu übernehmen. Es können beispielsweise hochfeste Metalle wie zum Beispiel Stahl eingesetzt werden.

Gemäß einer Ausführungsform können ferner zumindest an einigen der Kettenbolzen 35, 37, jeweils eine Führungsrolle 55 angeordnet sein, wobei die Führungsrolle 55 relativ zu dem jeweiligen Kettenbolzen 35, 37 um dessen Mittellängsachse drehbar gelagert sein sollte. Solche Führungsrollen 55 können ähnlich wie bei herkömmlichen Förderketten dazu dienen, die Förderkette 5 während einer Bewegung entlang der Erstreckungsrichtung 17 gegen nicht dargestellte Führungsschienen abzustützen und zu führen beziehungsweise eine Reibung zwischen der Förderkette 5 und einer tragenden und/oder führenden Struktur zu reduzieren. Die Führungsrollen 55 können beispielsweise mit Metall oder mit einem Polymerwerkstoff ausgebildet sein. Die Führungsrollen 55 können reibungsreduziert an den jeweiligen Kettenbolzen 35, 37 gelagert sein, beispielsweise über ein Gleitlager. Die Führungsrollen 55 können zwischen den Kettengliedern und den Anbindungselementen 39 angeordnet sein.

Zusätzlich zu den bereits genannten und detailliert beschriebenen Komponenten können an der Förderkette 5 weitere Komponenten vorgesehen sein. Beispielsweise können axial entlang der verlängerten Kettenbolzen 37 eine oder mehrere Gleitscheiben oder Distanzscheiben 57 vorgesehen sein. Außerdem kann an einem axialen Ende der verlängerten Kettenbolzen 37 jeweils ein Befestigungselement 63 wie beispielsweise die dargestellte, gewindefurchende Fixierschraube 59 vorgesehen sein, die an dem jeweiligen verlängerten Kettenbolzen 37 angeschraubt werden kann und auf diese Weise die mit diesem Kettenbolzen 37 gekoppelten Komponenten, das heißt insbesondere die Anbindungselemente 39 sowie die Gleitelemente 51 und Buchsen 53, gegen ein axiales Abrutschen von dem Kettenbolzen 37 sichert.

Eine Montage der Förderkette 5 kann beispielsweise erfolgen, indem an einer aus den Kettengliedern 27 und Kettenbolzen 35, 37 in bekannter Weise vormontierten Kette beziehungsweise Gelenkkette, Anbindungselemente 39 angeordnet beziehungsweise mit deren Kettenbolzen 37 gekoppelt werden. Eine beispielhafte Ausgestaltung des Kopplungsvorgangs für eine Ausführungsform des hierin beschriebenen Verfahrens zum Montieren einer Förderkette 5 kann mit Bezug auf die Figuren 3 und 4a bis 4c wie folgt beschrieben werden:

Damit die Anbindungselemente 39 der Förderkette 5 montiert werden können, weist die aus Kettengliedern 27 und Kettenbolzen 35, 37 gebildete Kette an jeder dritten Gelenksstelle verlängerte Kettenbolzen 37 auf. An diesen Kettenbolzen 37 werden zuerst Führungsrollen 55 angeordnet, d.h. beispielsweise axial aufgeschoben. Dann werden die Gleitelemente 51 auf die verlängerten Kettenbolzen 37 axial aufgeschoben. Anschließend werden die Anbindungselemente 39 montiert. Hierzu können die Anbindungselemente 39 jeweils mit ihrem hinteren Ende 43 axial auf die Kettenbolzen 37 geschoben werden und dann in der Verschwenkrichtung 61 verschwenkt werden, um die jeweiligen vorderen Enden 41 mit benachbarten verlängerten Kettenbolzen 37 zu koppeln. Alternativ können alle Anbindungselemente 39 mit Ausnahme eines letzten Anbindungselements 39 nacheinander mit ihren beiden Enden auf benachbarte verlängerte Kettenbolzen 37 axial aufgeschoben werden. Zumindest das letzte Anbindungselement 39 kann jedoch nicht in einer derartigen Weise axial aufgeschoben werden, sondern muss mit seinem vorderen Ende 41 tangential verschwenkt werden, um mit dem zugeordneten Kettenbolzen 37 gekoppelt zu werden. Anschließend können die Anbindungselemente 39 beispielsweise durch axiales Einschieben der Buchsen 53 und deren axialer Fixierung mithilfe der Fixierschrauben 59 an den verlängerten Kettenbolzen 37 gesichert werden. Zwischen den einzelnen Elementen können bei Bedarf noch Gleit- und/oder Distanzscheiben 57 vorgesehen werden, welche insbesondere Flanken der Anbindungselemente 39 voneinander distanzieren können.

Mit der hierin beschriebenen Förderkette 5 bzw. der gemäß dem hierin beschriebenen Verfahren montierten Förderkette 5 kann in vorteilhafter Weise auch ein Palettenband 3 für einen Fahrsteig 1 montiert werden.

Hierzu werden zunächst zwei Förderketten 5 gemäß dem hierin vorgestellten Verfahren montiert und anschließend parallel zueinander angeordnet. Anschließend werden mehrere Paletten 7 an den zwei Förderketten 5 montiert. Dabei werden die Paletten 7 in der Erstreckungsrichtung 17 der Förderketten 5 hintereinander angeordnet und jede der Paletten 7 an einem ersten seitlichen Ende an einem der Anbindungselemente 39 der ersten Förderkette 5 und an einem entgegengesetzten zweiten seitlichen Ende an einem der Anbindungselemente 39 der zweiten Förderkette 5 befestigt.

Anders ausgedrückt kann das Palettenband 3 durch zwei mit Anbindungselementen 39 ergänzte Förderketten 5 und den an den Anbindungselementen 39 festgeschraubten Paletten 7 gebildet werden. Hierbei kann beispielsweise in einer Werksmontage eine Montagevorrichtung eingesetzt werden, deren positionierendes Teil zwei den verschiedenen Palettenbreiten anpassbare Kettenführungen sind. Am einfachsten lässt sich dies beispielsweise mit einer drehbar gelagerten Achse mit Kettenrädern realisieren. Die Montagevorrichtung kann durch Bestückungsautomaten, beispielsweise in Form von Robotern, voll automatisiert sein.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Förderkette (5) für ein Palettenband (3) eines Fahrsteigs (1), aufweisend:
mehrere längliche Kettenglieder (27), welche in einer Erstreckungsrichtung (17) der Förderkette (5) mit einem Ketten-Teilungsabstand (T1) hintereinander angeordnet sind, wobei jeweils in der Erstreckungsrichtung (17) benachbarte Kettenglieder (27) in einem Gelenkbereich (33) mittels eines Kettenbolzens (35, 37) auf Zug belastbar und quer zu der Erstreckungsrichtung (17) um eine Mittellängsachse des Kettenbolzens (35, 37) verschwenkbar miteinander gekoppelt sind,
**dadurch gekennzeichnet, dass** die Förderkette (5) mehrere längliche Anbindungselemente (39) aufweist, welche in der Erstreckungsrichtung (17) hintereinander angeordnet sind, wobei jeweils zwei in der Erstreckungsrichtung (17) benachbarte Anbindungselemente (39) mit einem Kettenbolzen (37), welcher Kettenglieder miteinander koppelt, miteinander koppelbar und quer zu der Erstreckungsrichtung (17) um die Mittellängsachse des Kettenbolzens (37) verschwenkbar sind;
wobei jedes der Anbindungselemente (39) an einem vorderen Ende (41) mit einem zugeordneten ersten der Kettenbolzen (37) gekoppelt ist und an einem hinteren Ende (43) mit einem zugeordneten zweiten der Kettenbolzen (37) gekoppelt ist,
wobei ein Anbindungselement-Teilungsabstand (T2) zwischen dem ersten und dem zweiten Kettenbolzen (37) ein ganzzahlig Vielfaches des Ketten-Teilungsabstandes (T1) ist, und wobei jedes der Anbindungselemente (39) einen Befestigungsbereich (65) zur Anbindung einer Palette (7) aufweist.

2. Förderkette nach Anspruch 1, wobei das vordere Ende (41) des
Anbindungselements (39) verschwenkbar und koaxial positioniert mit dem zugeordneten ersten Kettenbolzen (37) gekoppelt ist; und
wobei das hintere Ende (43) des Anbindungselements (39) verschwenkbar und in der Erstreckungsrichtung (17) linear geführt mit dem zugeordneten zweiten Kettenbolzen (37) gekoppelt ist.

3. Förderkette nach Anspruch 2, wobei das hintere Ende (43) des Anbindungselements (39) über eine vorgegebene Distanz (d) verlagerbar linear geführt ist.

4. Förderkette nach einem der vorangehenden Ansprüche, wobei jedes Anbindungselement (39) an zumindest einem seiner Enden (41, 43) in einer Richtung quer zur Erstreckungsrichtung (17) und quer zur Mittellängsachse des zugeordneten Kettenbolzens (37), mit dem das jeweilige Ende (41, 43) gekoppelt ist, lösbar mit dem zugeordneten Kettenbolzen (37) gekoppelt ist.

5. Förderkette nach einem der vorangehenden Ansprüche, wobei benachbarte Anbindungselemente (39) in der Erstreckungsrichtung (17) einander überlappend angeordnet sind und das hintere Ende (43) eines vorderen der Anbindungselemente (39) sowie das vordere Ende (41) eines hinteren der Anbindungselemente (39) jeweils mit einem gemeinsamen Kettenbolzen (37) gekoppelt ist.

6. Förderkette nach einem der vorangehenden Ansprüche, wobei das hintere Ende (43) der Anbindungselemente (39) jeweils über ein Gleitelement (51) an dem zugeordneten Kettenbolzen (37) gehalten ist, wobei das Gleitelement (51) zwischen einander gegenüberliegende Oberflächen des Anbindungselements (39) einerseits und des Kettenbolzens (37) andererseits zwischengelagert ist.

7. Förderkette nach Anspruch 6, wobei das Anbindungselement (39) an seinem hinteren Ende (41) eine langloch-artige Durchgangsöffnung (47) mit zueinander parallelen Innenoberflächen aufweist und wobei das Gleitelement (51) eine Außenkontur mit zueinander parallelen und an die Innenoberflächen der Durchgangsöffnung (47) angrenzenden Außenoberflächen aufweist.

8. Förderkette nach einem der vorangehenden Ansprüche, wobei das Anbindungselement (39) am vorderen und am hinteren Ende (41, 43) jeweils eine Durchgangsöffnung (45, 47) aufweist, durch die hindurch sich im mit dem jeweils zugeordneten Kettenbolzen (37) gekoppelten Zustand der jeweilige Kettenbolzen (37) erstreckt, und wobei das Anbindungselement (39) an einer dieser Durchgangsöffnungen (45) eine seitliche Öffnung (49) derart aufweist, dass der Kettenbolzen (37) nach einem Entfernern einer Buchse (53) aus der Durchgangsöffnung (45) heraus durch die seitliche Öffnung (49) herausbewegbar und dadurch aus der Kopplung mit dem Kettenbolzen (37) lösbar ist.

9. Förderkette nach Anspruch 8, wobei das Gleitelement (51) und/oder die Buchse (53) zumindest teilweise aus einem Polymerwerkstoff gefertigt ist.

10. Förderkette nach einem der vorangehenden Ansprüche, wobei das Anbindungselement (39) zumindest teilweise aus Metall gefertigt ist.

11. Förderkette nach einem der vorangehenden Ansprüche, wobei zumindest an einigen der Kettenbolzen (37) ferner eine Führungsrolle (55) relativ zu dem Kettenbolzen (37) drehbar gelagert angeordnet ist.

12. Palettenband (3) für einen Fahrsteig (1), aufweisend:
eine erste und eine zweite Förderkette (5) gemäß einem der Ansprüche 1 bis 11, wobei die zwei Förderketten (5) parallel zueinander angeordnet sind; und
mehrere Paletten (7), welche in einer Erstreckungsrichtung (17) der Förderketten (5) hintereinander angeordnet sind;
wobei jede der Paletten (7) an einem ersten seitlichen Ende an einem Befestigungsbereich (65) der Anbindungselemente (39) der ersten Förderkette (5) und an einem entgegengesetzten zweiten seitlichen Ende an einem Befestigungsbereich (65) der Anbindungselemente (39) der zweiten Förderkette (5) befestigt ist.

13. Palettenband nach Anspruch 11, wobei jede der Paletten (7) um wenigstens ein ganzzahlig Vielfaches länger als die Kettenglieder (27) ist.

14. Fahrsteig (1), aufweisend:
ein Palettenband (3) gemäß einem der Ansprüche 12 oder 13; und
zwei Umlenkeinrichtungen (21) jeweils mit Umlenkkettenrädern (9) zum Umlenken des Palettenbandes (3) in Umlenkbereichen (19) an entgegengesetzten Enden des Fahrsteigs (1).

15. Fahrsteig nach Anspruch 14, wobei die Umlenkkettenräder (9) einen Durchmesser zwischen 20 bis 40 cm und eine Zähnezahl von mindestens 17 Zähnen aufweisen.

## Claims

1. A conveyor chain (5) for a pallet belt (3) of a moving walkway (1), comprising:
multiple elongate chain links (27) that are arranged behind one another at a chain pitch (T1) in a longitudinal direction (17) of the conveyor chain (5), wherein chain links (27) lying adjacent to one another in the longitudinal direction (17) can be respectively subjected to a tensile load in a joint region (33) by means of a link pin (35, 37) and are coupled to one another so as to be pivotable about a longitudinal center axis of the link pin (35, 37) transverse to the longitudinal direction (17),
**characterized in that** the conveyor chain (5) comprises multiple elongate connecting elements (39), which are arranged behind one another in the longitudinal direction (17), wherein two connecting elements (39) lying adjacent to one another in the longitudinal direction (17) respectively can be coupled to one another by means of a link pin (37), which couples the chain links to one another, and pivoted about the longitudinal center axis of the link pin (37) transverse to the longitudinal direction (17);
wherein each of the connecting elements (39) is coupled to an associated first link pin (37) with a front end (41) and coupled to an associated second link pin (37) with a rear end (43),
wherein a connecting element pitch (T2) between the first and second link pin (37) amounts to an integral multiple of the chain pitch (T1), and wherein each of the connecting elements (39) has a fastening region (65) for connecting a pallet (7).

2. The conveyor chain according to claim 1, wherein the front end (41) of the connecting element (39) is coupled to the associated first link pin (37) so as to be pivotable and coaxially positioned; and
wherein the rear end (43) of the connecting element (39) is coupled to the associated second link pin (37) so as to be pivotable and linearly guided in the longitudinal direction (17).

3. The conveyor chain according to claim 2, wherein the rear end (43) of the connecting element (39) is linearly guided so as to be displaceable over a predefined distance (d).

4. The conveyor chain according to one of the preceding claims, wherein each connecting element (39) is on at least one of its ends (41, 43) separably coupled to the associated link pin (37) in a direction extending transverse to the longitudinal direction (17) and transverse to the longitudinal center axis of the associated link pin (37), to which the respective end (41, 43) is coupled.

5. The conveyor chain according to one of the preceding claims, wherein adjacent connecting elements (39) overlap one another in the longitudinal direction (17) and the rear end (43) of a front connecting element (39) and the front end (41) of a rear connecting element (39) are respectively coupled to a common link pin (37).

6. The conveyor chain according to one of the preceding claims, wherein the rear end (43) of the connecting elements (39) is respectively held on the associated link pin (37) by means of a sliding element (51), and wherein the sliding element (51) is mounted between opposing surfaces of the connecting element (39) on the one hand and the link pin (37) on the other hand.

7. The conveyor chain according to claim 6, wherein the connecting element (39) has a slot-like passage opening (47) with mutually parallel inner surfaces on its rear end (41), and wherein the sliding element (51) has an outer contour with mutually parallel outer surfaces that border on the inner surfaces of the passage opening (47).

8. The conveyor chain according to one of the preceding claims, wherein the connecting element (39) respectively has a passage opening (45, 47) on its front end and on its rear end (41, 43), wherein the respective link pin (37) extends through said passage opening in the state, in which the connecting element is coupled to the respectively associated link pin (37), and wherein the connecting element (39) has a lateral opening (49) on one of these passage openings (45) such that the link pin (37) can be moved out of the passage opening (45) through the lateral opening (49) and thereby separated from the coupling to the link pin (37) after the removal of a bush (53).

9. The conveyor chain according to claim 8, wherein the sliding element (51) and/or the bush (53) are at least partially made of a polymeric material.

10. The conveyor chain according to one of the preceding claims, wherein the connecting element (39) is at least partially made of metal.

11. The conveyor chain according to one of the preceding claims, wherein a guide roller (55) furthermore is mounted on at least a few of the link pins (37) so as to be rotatable relative to the link pin (37).

12. A pallet belt (3) for a moving walkway (1), comprising:
a first and a second conveyor chain (5) according to one of claims 1 to 11, wherein the two conveyor chains (5) are arranged parallel to one another; and
multiple pallets (7) that are arranged behind one another in a longitudinal direction (17) of the conveyor chains (5);
wherein each of the pallets (7) is fastened on a fastening region (65) of the connecting elements (39) of the first conveyor chain (5) with a first lateral end and fastened on a fastening region (65) of the connecting elements (39) of the second conveyor chain (5) with an opposite second lateral end.

13. The pallet belt according to claim 11, wherein each of the pallets (7) is longer than the chain links (27) by at least an integral multiple.

14. A moving walkway (1), comprising:
a pallet belt (3) according to one of claims 12 or 13; and
two deflection devices (21) with respective deflection chain wheels (9) for deflecting the pallet belt (3) in the deflecting regions (19) on opposite ends of the moving walkway (1).

15. The moving walkway according to claim 14, wherein the deflection chain wheels (9) have a diameter between 20 and 40 cm and comprise at least 17 teeth.

## Revendications

1. Chaîne de transport (5) pour une bande de palettes (3) d'un tapis roulant (1), comportant : plusieurs maillons de chaîne (27) allongés, lesquels sont disposés les uns derrière les autres dans un sens d'extension (17) de la chaîne de transport (5) à une distance de séparation (T1) de la chaîne, dans laquelle respectivement les maillons de chaîne (27) adjacents dans le sens d'extension (17) peuvent être chargés en traction au moyen d'un tourillon de chaîne (35, 37) dans une zone d'articulation (33) et sont accouplés les uns aux autres de manière à pouvoir pivoter transversalement au sens d'extension (17) autour d'un axe longitudinal médian du tourillon de chaîne (35, 37),
**caractérisée en ce que** la chaîne de transport (5) comporte plusieurs éléments de raccordement (39) allongés, lesquels sont disposés les uns derrière les autres dans le sens d'extension (17), dans laquelle respectivement deux éléments de raccordement (39) adjacents dans le sens d'extension (17) peuvent être accouplés à un tourillon de chaîne (37), dont les maillons de chaîne sont accouplés les uns aux autres, peuvent être accouplés les uns aux autres et peuvent être pivotés transversalement au sens d'extension (17) autour de l'axe longitudinal médian du tourillon de chaîne (37) ;
dans laquelle chacun des éléments de raccordement (39) est accouplé, au niveau d'une extrémité (41) avant, à un premier des tourillons de chaîne (37) associé et, au niveau d'une extrémité (43) arrière, à un second des tourillons de chaîne (37) associé,
dans laquelle une distance de séparation (T2) de l'élément de raccordement entre le premier et le second tourillon de chaîne (37) est un multiple entier de la distance de séparation (T1) de la chaîne, et dans laquelle chacun des éléments de raccordement (39) comporte une zone de fixation (65) destinée au raccordement à une palette (7).

2. Chaîne de transport selon la revendication 1, dans laquelle l'extrémité (41) avant de l'élément de raccordement (39) est accouplée au premier tourillon de chaîne (37) associé de manière à pouvoir pivoter et positionnée de manière coaxiale ; et
dans laquelle l'extrémité (43) arrière de l'élément de raccordement (39) est accouplée au second tourillon de chaîne (37) associé de manière à pouvoir pivoter et être guidée linéairement dans le sens d'extension (17).

3. Chaîne de transport selon la revendication 2, dans laquelle l'extrémité (43) arrière de l'élément de raccordement (39) est guidée linéairement de manière à pouvoir se déplacer sur une distance (d) prédéterminée.

4. Chaîne de transport selon l'une quelconque des revendications précédentes, dans laquelle chaque élément de raccordement (39), au niveau de l'au moins une de ses extrémités (41, 43), au tourillon de chaîne (37) associé dans un sens transversal au sens d'extension (17) et transversalement à l'axe longitudinal médian du tourillon de chaîne (37) associé, auquel l'extrémité (41, 43) respective est accouplée, est accouplé de manière amovible.

5. Chaîne de transport selon l'une quelconque des revendications précédentes, dans laquelle les éléments de raccordement (39) adjacents sont disposés en se chevauchant dans le sens d'extension (17) et l'extrémité (43) arrière d'un élément de raccordement avant des éléments de raccordement (39) et l'extrémité (41) avant d'un élément de raccordement arrière des éléments de raccordement (39) sont respectivement accouplées à un tourillon de chaîne (37) commun.

6. Chaîne de transport selon l'une quelconque des revendications précédentes, dans laquelle l'extrémité (43) arrière des éléments de raccordement (39) est respectivement maintenue sur le tourillon de chaîne (37) associé par l'intermédiaire d'un élément coulissant (51), dans laquelle l'élément coulissant (51) est monté entre les surfaces opposées l'une à l'autre de l'élément de raccordement (39) d'une part et du tourillon de chaîne (37) d'autre part.

7. Chaîne de transport selon la revendication 6, dans laquelle l'élément de raccordement (39) comporte, au niveau de son extrémité (41) arrière, une ouverture traversante (47) en forme de trou oblong comportant des surfaces intérieures parallèles entre elles, et dans laquelle l'élément coulissant (51) comporte un contour extérieur comportant des surfaces extérieures parallèles entre elles et adjacentes aux surfaces intérieures de l'ouverture traversante (47).

8. Chaîne de transport selon l'une quelconque des revendications précédentes, dans laquelle l'élément de raccordement (39) comporte respectivement une ouverture traversante (45, 47), au niveau de l'extrémité avant et de l'extrémité arrière (41, 43), à travers laquelle s'étend le tourillon de chaîne (37) respectif dans l'état accouplé au tourillon de chaîne (37) respectif, et dans laquelle l'élément de raccordement (39) comporte une ouverture (49) latérale, au niveau de l'une desdites ouvertures traversantes (45) de telle sorte que le tourillon de chaîne (37), après qu'une douille (53) a été retirée de l'ouverture traversante (45), peut être sorti à travers l'ouverture (49) latérale et être ainsi libéré de l'accouplement au tourillon de chaîne (37).

9. Chaîne de transport selon la revendication 8, dans laquelle l'élément coulissant (51) et/ou la douille (53) sont au moins partiellement fabriqués en un matériau polymère.

10. Chaîne de transport selon l'une quelconque des revendications précédentes, dans laquelle l'élément de raccordement (39) est au moins partiellement fabriqué en métal.

11. Chaîne de transport selon l'une quelconque des revendications précédentes, dans laquelle un galet de guidage (55) est en outre monté rotatif par rapport au tourillon de chaîne (37) sur au moins certains des tourillons de chaîne (37).

12. Bande de palettes (3) pour un tapis roulant (1), comportant :
une première et une seconde chaîne de transport (5) selon l'une quelconque des revendications 1 à 11, dans laquelle les deux chaînes de transport (5) sont disposées parallèlement l'une à l'autre ; et
plusieurs palettes (7), lesquelles sont disposées les unes derrière les autres dans un sens d'extension (17) des chaînes de transport (5) ;
dans laquelle chacune des palettes (7) est fixée à une première extrémité latérale au niveau d'une zone de fixation (65) des éléments de raccordement (39) de la première chaîne de transport (5) et à une seconde extrémité latérale opposée au niveau d'une zone de fixation (65) des éléments de raccordement (39) de la seconde chaîne de transport (5).

13. Bande de palettes selon la revendication 11, dans laquelle chacune des palettes (7) est à au moins un multiple entier plus longue que les maillons de chaîne (27).

14. Tapis roulant (1), comportant :
une bande de palettes (3) selon l'une quelconque des revendications 12 ou 13 ; et
deux dispositifs de déviation (21) comportant respectivement des pignons à chaîne de déviation (9) permettant de dévier la bande de palettes (3) dans des zones de déviation (19) au niveau des extrémités opposées du tapis roulant (1).

15. Tapis roulant selon la revendication 14, dans lequel les pignons à chaîne de déviation (9) présentent un diamètre compris entre 20 et 40 cm et un nombre de dents d'au moins 17 dents.
